(19) **Europäisches Patentamt**
**European Patent Office**
**Office européen des brevets**

(11) **EP 2 309 866 B1**

(12) **EUROPEAN PATENT SPECIFICATION**

(45) Date of publication and mention
of the grant of the patent:
**11.11.2015 Bulletin 2015/46**

(21) Application number: **09761511.6**

(22) Date of filing: **12.06.2009**

(51) Int Cl.:
$A21D\ 2/18^{(2006.01)}$     $A23L\ 1/0522^{(2006.01)}$
$A23L\ 1/09^{(2006.01)}$     $A21D\ 13/00^{(2006.01)}$
$A23L\ 1/00^{(2006.01)}$

(86) International application number:
**PCT/EP2009/004244**

(87) International publication number:
**WO 2009/149948 (17.12.2009 Gazette 2009/51)**

(54) **No- or low-sugar wafer comprising monodisperse maltodextrins**

Waffel ohne Zucker, oder zuckerreduziert, welche monodisperses Maltodextrin enthält

Gaufre sans sucre, ou avec de sucre réduit contenant maltodextrine monodisperse

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.06.2008 GB 0810856**
**12.11.2008 GB 0820696**

(43) Date of publication of application:
**20.04.2011 Bulletin 2011/16**

(73) Proprietor: **Nestec S.A.**
**1800 Vevey (CH)**

(72) Inventors:
• **ARRACHID, Abdessamad**
**York YO30 7AU (GB)**
• **TUDORICA, Carmen**
**CH-1815 Clarens (CH)**

(74) Representative: **Gagliardi, Tatiana et al**
**Nestec SA**
**CT-IAM**
**Avenue Nestlé 55**
**1800 Vevey (CH)**

(56) References cited:
**EP-A- 1 982 598**     **WO-A-03/061405**
**US-B1- 6 824 799**

• **STEFFI HEMPEL ET AL: "Influence of inulin modification and flour type on the sensory quality of prebiotic wafer crackers" EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 224, no. 3, 31 March 2006 (2006-03-31), pages 335-341, XP019458174 ISSN: 1438-2385**
• **ANONYMOUS: "Cargill Dry MD 01913"[Online] 1 March 2003 (2003-03-01), pages 1-2, XP002543094 Retrieved from the Internet: URL: http://www.cargillfoodproducts.com/pdf s/ starch/01913.pdf> [retrieved on 2009-08-26]**
• **F.AVALTRONI ET AL.: "Maltodextrin molecular weight distribution influence on the glass transition temperature and viscosity in aqueous solutions" CARBOHYDRATE POLYMERS, vol. 58, 2004, pages 323-334, XP002543096**
• **S.M.LAKSHMINARAYAN ET AL.: "Effect of maltodextrin and emulsifiers on the viscosity of cake batter and on the quality of cakes" JOURNAL OF THE SCIENCE OF FOOD AND AGRICULTURE, vol. 86, 2006, pages 706-712, XP002543095**
• **B.VALLES PAMIERS ET AL.: "Understanding the texture of low moisture cereal products: mechanical and sensory measurements of crispness" JOURNAL OF THE SCIENCE OF FOOD AND AGRICULTURE, vol. 80, 2000, pages 1679-1685, XP002544541 cited in the application**

**(Cont. next page)**

EP 2 309 866 B1

• E.VAN HECKE, K.ALLAF, J.M.BOUVIER: "Texture and Structure of crispy-puffed food products, Part II: Mechanical properties in puncture" JOURNAL OF TEXTURE STUDIES, vol. 29, 31 August 1998 (1998-08-31), pages 617-632, XP002544542

## Description

## Field of the invention

The present invention relates to a moisture resistant or moisture tolerant product, which is a wafer which contains maltodextrins with a monodisperse type molecular distribution.

## Background of the invention

Wafers are baked products which are made from wafer batter and have crisp, brittle and fragile consistency. They are thin, with an overall thickness usually from < 1 to 4 mm and typical product densities range from 0.1 to 0.3 g/cm$^3$.

Wafers are manufactured by preparing a batter containing mainly flour and water to which other minor ingredients may be added. A batter for use in the manufacture of commercial flat wafers typically contains 40 to 50 % flour. Common formulations may also comprise at least one of the following ingredients: fat and/or oil, lecithin and/or emulsifiers, sugar, whole egg, salt, sodium bicarbonate, ammonium bicarbonate, skim milk powder, soy flour, yeast, and/or enzymes such as xylanases or proteases, for example.

Wafers may be distinguished from other biscuits/cookies in that wafers are the result of baking a batter whereas biscuits/cookies are usually baked out of dough. Batter is a liquid suspension that will flow through a pipe whereas biscuit dough is rather stiff to permit rolling and flattening and normally has a water content of less than 50 parts per 100 parts of flour.

Two basic types of wafer are described by K.F. Tiefenbacher in "Encyclopaedia of Food Science, Food Technology and Nutrition p 417-420 - Academic Press Ltd London - 1993":

   1) No- or low-sugar wafers. The finished biscuits contain from zero to a low percentage of sucrose or other sugars. Typical products are flat and hollow wafer sheets, moulded cones or fancy shapes.
   2) High-sugar wafers. More than 10 % of sucrose or other sugars are responsible for the plasticity of the freshly baked sheets. They can be formed into different shapes before sugar recrystallization occurs. Typical products are moulded and rolled sugar cones, rolled wafer sticks and deep-formed fancy shapes.

No- or low sugar wafers have a different texture and taste compared to high sugar wafers. When layered with a filling, they are used as the centre of well known chocolate confectionery products such as KIT KAT®.

In a common method of no- or low-sugar wafer manufacture, the batter is fed by pumping to a heated baking surface comprising a series of wafer baking moulds corresponding to the type of wafer desired, each wafer baking mould consisting of two heated engraved metal plates, also known as baking irons having upper and lower sections arranged to open and close, one of which may be moved relative to the other. The baking moulds are disposed one after the other, continuously circulating through a wafer oven by travelling from one end to the other and which are opened and closed in the front entrance of the wafer oven for the depositing of the batter and removal of the individual wafers. The wafer baking moulds pass through a baking oven for a determined time at a certain temperature, for instance 1-3 minutes at 140 °C to 180 °C, to produce large flat wafer sheets with a low moisture content.

Wafers produced by extrusion are also known from WO 2008/031796 and WO 2008/031798.

The surfaces of wafers are precisely formed, following the surface shape of the plates between which they were baked. They often carry a pattern on one surface or on both. After cooling, the wafers are processed according to the requirements of the final product.

Enzymes may also be used in wafer manufacture. For example endo-proteinases (such as neutral bacterial proteinase from Bacillus subtilis or papain from Carica papaya) may be used to hydrolyse the peptide bonds in wheat gluten, which has the effect of preventing the formation of gluten lumps, and xylanase (pentosanase) may be used to hydrolyse the xylan backbone in arabinoxylan (pentosan), which has the effect of decreasing the water binding capacity of wheat pentosans, redistributing water among other flour components and reducing batter viscosity. Combinations of these enzymes may also be used, mainly to decrease batter viscosity, make batters more homogenous, increase machinability, allow standard flour grades to be employed and/or increase the flour level in batter. These preparations have become widely accepted (Food Marketing & Technology, April 1994, p. 14).

Light and crispy wafers are highly appreciated by the consumer especially when combined with indulgent fillings. One of the main attributes of wafers is their property of crispness when used in contact with components containing contrasting textures such as creams, jams or chocolate. However, a major disadvantage is that the level of crispness usually falls when wafers absorb moisture from some of the components or the external environment. It is well known that, if the water content of a cereal wafer increases beyond a certain level, the wafer suffers a dramatic deterioration in quality, losing crispness and becoming cardboard-like and non-brittle. As a consequence, the wafer is perceived as soggy and the final food products are undesirable to consumers.

WO 02/39820 seeks to provide baked food products with an increased crispiness at high moisture content by the use of sweeteners such as crystalline hydrate forming sugars (such as maltose, isomaltose, trehalose, lactose and raffinose) or high molecular weight starch hydrolysates. This approach is not suitable for no- or low sugar wafers which don't contain the required high levels of sweeteners. Further, batter containing sugars (e.g. glucose syrup or sucrose) or maltose (e.g. produced from the reaction of maltodextrins with the intrinsic alpha and beta amylase of the flour) has a tendency to stick to the plate during baking and so the wafer becomes difficult to release. In an industrial automatic plant, sticking wafers present a major problem as they are difficult to remove and end up being baked multiple times, thereby spoiling a percentage of the oven's output until the oven is stopped and the plates cleaned.

EP-A-1415539 discloses a flour based food product such as a wafer produced by using a thermostable alpha-amylase to manipulate textural properties of wafers. No mention is made of moisture tolerance. The use of α-amylase has been proposed to increase moisture tolerance in co-pending European patent application no. 07106604.7. The α-amylase is intended to catalyse the hydrolysis of the starch into smaller molecules. This in effect creates maltodextrin in situ. However, there are significant processing problems with the use of α-amylase. During baking on traditional wafer ovens, the action of the α-amylase produces a very low viscosity batter during the spreading of the batter when the plates close. As a result, a lot of batter is evacuated through the venting strips giving big moist doddings. Because of the increased spreadability, the resulting wafer is lighter (compared to a non α-amylase treated wafer for the same recipe), and hence more fragile at the release. Because of the big doddings sticking on the plate sides, the wafer release is not good and a high level of breakages is observed. It is important that wafers are tolerant to moisture and in particular that they maintain their crisp brittle texture even if they are exposed to an environment having increased moisture content. Accordingly, it is an object of the present invention to provide wafers which are moisture tolerant or moisture resistant. It is a further object of the invention to overcome the problems discussed above, in particular in relation to the processability of the wafer during production.

Steffi Hempel at al, 'Influence of inulin modification and flour type on the sensory quality of prebiotic water crackers' (European Food Research and Technology, Vol 224, no. 3, 31 March 2006) discloses a batter for sugar free wafer crackers, the batter comprising 37.5 wt% flour, 55 wt% water and 5 wt% inulin. Inulin is a known fructo oligosaccharide.

US 6824799 (Huang Victor) describes provision of a wafer with enhanced crispiness and a higher resistance to moisture comprising high molecular weight starch hydrolysates such as maltodextrin.

Neither of the preceding documents describe a no or low sugar wafer with the maltodextrin in the amounts and with the molecule weight distribution as described in the present invention.

## Summary of the invention

The present invention seeks to overcome the above disadvantages by providing moisture resistance to the wafer itself. We have surprisingly found that a moisture resistant no- or low sugar wafer which maintains its crispness in high water activity environments may be prepared by using a monodisperse maltodextrins in the batter.

According to a first aspect the invention provides a no- or low-sugar wafer comprising monodisperse maltodextrins as defined by the claims.

According to a second aspect the invention provides a wafer batter for a no- or low-sugar wafer comprising monodisperse maltodextrins as defined by the claims

According to a further aspect the invention provides methods for making a wafer as defined by the claims Further the invention provides a food product comprising a wafer as defined by the claims .

A further aspect of the invention provides the use of monodisperse maltodextrins as defined by the claims in the production of a no- or low-sugar wafer to increase the moisture resistance of the wafer

## Brief description of the drawings

Fig. 1 shows the molecular distribution on a log scale for the maltodextrin 01910 C* Dry from Cargill. The black line shows the ideal target situation for a mono dispersion on a log scale. The dots correspond to the material we used that was the closest to the target.

Fig. 2 is a graph showing the moisture tolerance benefit of using monodisperse maltodextrins in wafer, as measured using the Wc methodology. A corresponds to a "classic" wafer and B corresponds to a wafer containing monodisperse maltodextrins in accordance with the invention.

## Detailed description of the invention

The invention is based on the use of monodisperse maltodextrins in the production of no- or low sugar wafers that show high moisture resistance and good processability during manufacture.

In the present invention, no- or low sugar wafers are defined as wafers containing from 0 to 15% by weight sweetener, preferably from 0 to 10% by weight sweetener, more preferably from 0 to 8% by weight sweetener, and even more preferably from 0 to 5% sweetener based on the weight of the wafer. The sweetener is sucrose or another sugar or a starch hydrolysate having a Dextrose Equivalents (DE) of greater than 20 or an inulin hydrolysate with a Fructose Equivalent of greater than 20 (where Fructose Equivalent is understood as an equivalent term to DE but applied to the hydrolysis products of inulin rather than starch, making an assumption that all the monomer units are fructose for this purpose), or mixtures of two or more of these sweeteners. Examples of sugars other than sucrose are, for example, glucose, lactose, maltose or fructose and crystalline hydrate formers such as isomaltose, trehalose, or raffinose. The wafer may also contain added enzymes such as proteinases and/or xylanases.

The wafer may be a flat wafer either having geometric shapes or cartoons character shapes, as well as alphabet letters or numbers, for example. It can also be a three dimensional shaped wafer such as, for example, a cone, a glass, a dish. Wafer texture results from the generation of gas cells in a gel structure mainly composed of gelatinised starch. The high temperature of the baking plates induces a rapid gelatinisation of starch granules present in the flour and production and expansion of the gas bubbles inside the gelatinous matrix. These gas cells are, in the common practice, mainly generated from gassing agents such as added bicarbonates or carbon dioxide produced by gas-generating microorganisms such as yeast during batter fermentation and from steam produced by heating. Therefore the wafer can be seen as a solid foam of gelatinised and dried starch/flour with dispersed gas cells (which can form an almost continuous phase in certain cases).

A wafer batter usually comprises around 40-50% flour, for example wheat flour, which itself contains approximately 70% of starch mainly occurring in the form of granules. In some batters, starch may be added in addition to the flour. The batter may also comprise at least one of the following ingredients: fat and/or oil, lecithin and/or emulsifiers, sugar, whole egg, salt, sodium bicarbonate, ammonium bicarbonate, skim milk powder, soy flour, yeast, and/or enzymes such as xylanases or proteases, for example. Any standard wafer batter may be used in accordance with the invention by adding monodisperse maltodextrins or fructooligosaccharides.

A wafer of the present invention is prepared as defined by the claims The moisture-resistant wafer is prepared by a process comprising the steps of making a batter as defined by the claims by mixing at least flour, water and monodisperse maltodextrins and baking it on at least one hot surface. The use of monodisperse maltodextrins does not bring any extra complexity to the wafer making process. Monodisperse maltodextrins are available as powders and may be added to the batter at the same time as the other ingredients. Alternatively the monodisperse maltodextrins may be added to the batter as a solution. In fact, the monodisperse maltodextrins may be added to the wafer batter at any time, but preferably at the same time as the other minor ingredients (e.g. sugar, fat, lecithin, sodium bicarbonate) or before the addition of flour.

The wafer batter contains from 5 to 30%, preferably from 10 to 20%, most preferably from 13 to 15% by weight of monodisperse maltodextrins based on the weight of the wafer batter.

Monodisperse maltodextrins are maltodextrins with a monodisperse type of molecular weight distribution. A monodisperse type of molecular weight distribution is understood herein to mean a monodistributed molecular weight distribution with a high polydispersity index. A high polydispersity index is 18 or greater, preferably 21 or greater.

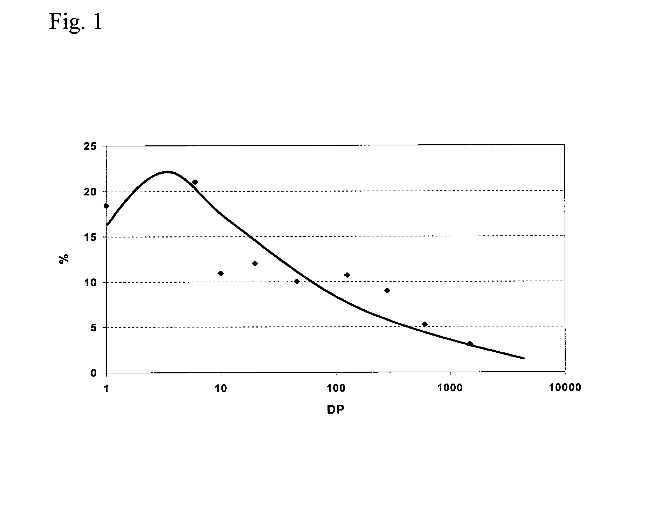

The term monodistributed molecular weight distribution may refer to a bell-shaped type of degree of polymerisation (DP) distribution, as shown in Fig 1. In contrast, materials showing a polydistributed molecular weight distribution would show more than one bell-shaped distribution across the DP range. Typically a suitable monodisperse maltodextrin would comprise at least 50 % of molecules (by weight) with a DP between 6 and 300. In accordance with the invention the monodisperse maltodextrins:

- have molecules spread over a wide range of DP, in other words, the polydispersity index (PDI) is 18 or above, preferably 21 or above;
- with 0% to 30%, preferably greater than 0% to 20%, more preferably from 1 to 6%, most preferably about 5 to 6% by weight of molecules, having a low DP (<5);
- with greater than 40%, preferably greater than 50%, by weight of molecules, having a medium DP (6 to 300);
- the highest DP values should be greater than 1000, preferably greater than 1500. For example, 0% to 30%, preferably greater than 0% to 20%, more preferably from 1 to 6%, most preferably about 5 to 6% by weight of molecules, have a high DP.

A monodisperse distribution has a progressive variation in high DP fraction characterised by a high polydispersity index (PDI). PDI is defined as the ratio between the weight average molecular weight and the number average molecular weight and refers to how broad is the DP range. The monodistribution according to the invention presents a gentle slope towards higher DP so that the PDI is high it is 18 or above, preferably 21 or above). The advantage of this distribution is that the different DP fractions do not behave independently and hence have individual impact on the processing.

It is advantageous to have molecules spread over a wide range of DP because it helps to dilute the effect of certain DP ranges and to preserve the texture of the wafer. In addition, it is advantageous to ensure a low proportion of molecules with a low DP because these molecules are responsible for the sticking of the wafer on the plates during baking, if used at too high a concentration. Further, when high concentrations of small sugars are used, the texture of the wafer is dramatically changed and it becomes very hard. This is generally not considered to be acceptable to the consumer who is seeking lightness in the wafer. It has been found that by using molecules with a wide range of DP overcomes these issues by delivering wafers that present satisfactory lightness and aeration.

The small number of molecules with low DP is advantageous because it is these low DP molecules that cause stickiness on the wafer baking plates.

The higher number of molecules with DP 6-300 is advantageous because the molecular weight of these molecules is high enough to avoid stickiness on the plate during baking, while providing the targeted Dextrose Equivalent.

Monodisperse maltodextrins according to the invention have a Dextrose Equivalent (DE) of from 5 to 20, more preferably from 8 to 15 and most preferably about 10.

To have good processability, a low or no-sugar wafer recipe should not cause the wafer to stick to the wafer baking plate after baking, the wafer should not be so friable as to make it difficult to transport and layer with filling creams without it breaking and the wafer batter should be stable for at least 30 minutes, preferably 1 hour after manufacture to allow storage of the batter before wafer baking.

By using a monodisperse distribution of maltodextrins the right combination of long and short chain length allows a reduction in the overall susceptibility of the maltodextrins to Maillard reactions that are at the origin of the stickiness on the wafer plates, in the extruder or at the die. This combination of long and short chain length provides enough molecular entanglement and reduces significantly the free volume for molecular motions. As a result, a higher moisture tolerance is provided and maintained without the negative effect on processing which the smaller chain lengths would have caused.

Preferred embodiments of the invention use monodisperse maltodextrins that may be derived from corn, wheat, rice, cassava or potatoes, most preferably corn. Examples of monodisperse maltodextrins which work in accordance with the invention are C*Dry 01910 Corn Maltodextrin and Dry MD 01913, both from Cargill®. Other preferred embodiments of the invention use monodisperse fructooligosaccharides that may be derived from bananas, onions, chicory root, garlic, asparagus, barley, wheat, jicama, tomatoes, leeks, Jerusalem artichokes or yacón. Commercially available monodisperse fructooligosaccharides may be used.

Fig. 1 shows the molecular distribution on a log scale for the maltodextrin 01910 C* Dry from Cargill®. The black line shows the ideal target situation for a mono dispersion on a log scale. The dots correspond to the material used in the example that was the closest to the target. This material demonstrates the important factors of a spread over a wide range of DP, with the proportion of low DP (<5) less than 20% and the proportion of medium DP (6 to 300) more than 50%.

In accordance with the invention, preferably neither the wafer batter nor the wafer contain extrinsic α-amylase. Similarly, preferably neither the dough nor the expanded extruded cereal products contain extrinsic α-amylase.

Crispness is an attribute that relates to the number of mechanical fractures that occur upon application of a certain force and to the magnitude of the force needed to cause a fracture. Ways to quantify crispness are known in the art, notably from Mitchell, J. R. et al. in Journal of the Science of Food and Agriculture, 80, 1679-1685, 2000. Thus, crispness can be quantified by a number of parameters.

The crispness of wafers may be evaluated by a penetration test (also known as a puncture test or crush test) which is performed by using a texture analyser able to record force/distance parameters during penetration of a probe into the wafer or product. The instrument forces a cylindrical probe into a stack of five wafers and the structural ruptures (force drops) are recorded over a certain distance. The frequency of force drops allows discrimination between wafer textures whereby the higher the number of force drops, the higher the crispness. The conditions used for this test were:

Texture Analyser TA.HD, Stable Micro Systems, England;
Load cell 50 kg;
4mm diameter cylinder stainless probe;
Penetration rate 1mm/s;
Distance 8mm;
Record of force drops greater than 0.2N;
Trigger force greater than 0.5N;
Acquisition rate 500 points per second.

Van Hecke E. (1991), ("Contribution a l'étude des propriétés texturals des produits alimentaires alvéolés. Mise au point de nouveaux capteurs. Ph.D. Thesis, Université de Technologie de Compiègne") proposed a method based on 4 parameters to characterise force-deformation curve. Changes in moisture tolerance may be associated to one of these parameters - crispiness work, Wc - which is defined as Crispness Work, Wc (N.mm). N.mm (Newton millimetre) is the non-SI work unit used.

$$\text{Wc(N.mm)} = \frac{(A/d)}{(No/d)}$$

Where No; total number of peaks
d = distance of penetration (mm)
A = Area under the force-deformation curve (N.mm)

The above equation could be simplified to Wc = A/No.

**[0045]** The slope and the value of Wc will vary depending on the density of the wafer. In other words the value of Wc will depend on the water:flour ratio in the batter recipe. At similar weight, wafers tends to have similar hardness, which corresponds to the A value (area under the force-deformation curve (N.mm)) for the calculation of Wc.

A standard wafer tends to lose its perceived crispness progressively as the water activity is raised above 0.3. This loss of crispness is a continuum (continuous changes upon hydration) with many factors having an influence such as the recipe, density, geometry, etc. Using the above penetration test, we have shown that the Wc of standard wafers starts to increase as the water activity is raised from 0.1 to 0.25. Once the water activity of a standard wafer is increased above about 0.3, an increase in water activity of 0.1 results in an increase in the Wc of the said standard wafer greater than 2. As used herein the terms "moisture resistant" and "moisture tolerant" mean the same thing and will be used interchangeably. Accordingly, a moisture resistant wafer is defined herein as a wafer that maintains crispness in high water activity environments, i.e. it maintains its mechanical resistance and its initial sensory attributes when equilibrated at elevated water activity levels such that at water activities from 0.3 to 0.4, surprisingly from 0.4 to 0.5, and more surprisingly from 0.5 to 0.6, an increase of 0.1 in water activity results in a Wc increase less than 2 N.mm. Preferably at water activities from 0.3 to 0.6, an increase of 0.1 in water activity results in a Wc increase less than 1.5, more preferably less than 1.25, and more preferably less than 1.0 N.mm. At higher water activities a greater moisture tolerance may be observed in comparison with the standard wafer. Accordingly, preferably at water activities from 0.3 to 0.7, an increase of 0.1 in water activity results in a Wc increase less than 2-fold, preferably less than 1.5-fold and more preferably less than 1.25-fold.

The wafer of the invention can be presented to the consumer as a wafer by itself, but it can also be further processed to form a confectionery or savoury food product or a pet food. Therefore, the present invention also comprises a food product comprising a moisture-resistant wafer as defined by the claims in contact with another food material. The other food material may be a confectionery or savoury food product or a pet food. Preferably the wafer is in direct contact with the food material.

Conventional food materials may be used and examples of suitable food materials are chocolate, jelly, compound chocolate, ice-cream, sorbet, nut paste, cream-based products, cake, mousse, nougat, caramel, praline, jam, wafer rework or a combination of these ingredients with or without inclusions of the same ingredient in a different state or of a different ingredient. For savoury products suitable food materials would include fish or meat paste, cheese-based materials or vegetable puree. Such a food product may include one or more of these other materials as fillings for the wafer or expanded extruded cereal product. The food material may contain a high water activity. In the present invention, for a food material with a filling, after equilibration between the filling and the wafer according to the claims an acceptable sensory perception may be achieved for a water activity of up to 0.65, preferably up to 0.55. However, the filling may have previously had a higher water activity value since it will lose moisture during the equilibration phase. For example, it is possible to make a sandwich bar composed of external layers of wafers framing the same or different fillings. The sandwich can also be a succession of a wafer and filling pair, the first and last layers being wafer, comprising from 2 to 15 wafer layers. Although the use of a moisture barrier is generally unnecessary, a moisture barrier may optionally be used if desired.

It is also possible to use the wafer as the centre or part of the centre of a confectionery or savoury product or a pet food. The wafer may be enrobed or moulded in the coating material which can be any of the usual coatings, for example a chocolate, compound, icing, caramel or combinations of these. Preferably the food product is a confectionery product.

Since the wafers of the present invention maintain desired textural qualities such as crispness or brittleness at high water activities, the invention allows the production of novel confectionery products with healthier fillings such as low-fat or low-calorie fillings, or new fillings such as caramel, fruit jam or a real fruit filling, where the wafer is in direct contact with the filling without the need of a moisture barrier.

## Examples

The following examples are illustrative of the products and methods of making the same falling within the scope of the present invention.

Wafers were baked according to the following formulations:

For a "classic" wafer, the following recipe was used:

### Recipe A

| | |
|---|---|
| Flour | 100.0 parts |
| Water | 110.0 parts |
| Sucrose | 2.0 parts |
| Fat | 1.0 parts |
| Lecithin | 0.2 parts |
| Sodium bicarbonate | 0.2 parts |

For a wafer containing monodisperse maltodextrins in accordance with the invention, the following recipe was used:

### Recipe B

| | |
|---|---|
| Flour | 100.0 parts |
| Water | 120.0 parts |
| Maltodextrins | 15.0 parts |
| Fat | 1.0 parts |
| Lecithin | 0.2 parts |

(continued)

| Sodium bicarbonate | 0.2 parts |
|---|---|

In Recipe B, the water amount has been increased to produce wafers with similar weight to those produced by following Recipe A. This is to ensure that the Wc values measured for each type of wafer are comparable.

The wafers were prepared by baking the batters for 2 minutes in an oven (25-plate wafer oven, Hebenstreit Moerfelded, West Germany) between two metal plates heated to 130°C. After short cooling, samples were hydrated in climatic chambers at the desired water activity (Aw) for 15 days before mechanical testing. The Aw was measured in each sample after hydration to verify the correct hydration of the sample.

In order to assess the moisture tolerance of the wafers, a texture analyser able to record force/distance parameters during penetration of a probe into the wafer was used as described above. The instrument forces a cylindrical probe into a stack of five wafers and the structural ruptures (force drops) are recorded. The frequency of force drops allows discrimination between wafer textures whereby the higher the number of force drops, the higher the crispiness. The conditions used for this test were: Texture Analyser TA.HD, Stable Micro Systems, England; load cell 50 kg; 4mm diameter cylinder stainless probe; penetration rate 1mm/s; distance 8mm; record of force drops greater than 0.2N; trigger force greater than 0.5N; acquisition rate 500 points per second.

The mechanical properties of the different wafers were analysed using a method based on the following 4 parameters which were used to characterise force-deformation curve.

Wc = Crispness Work (N.mm)
No = total number of peaks
d = distance of penetration (mm)
A = Area under the force-deformation curve (N.mm)

Changes in moisture tolerance may be associated to crispiness work, Wc which is defined as:

$$Wc(N.mm) = \frac{(A/d)}{(No/d)} = \frac{A}{No}$$

The lower the value of Wc, the crisper the wafer. The lower the increase in Wc for a given increase in water activity, the greater the moisture tolerance.

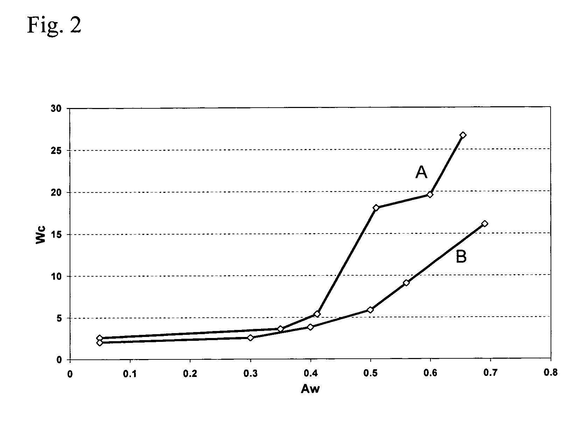

The graph shown in Fig. 2 shows the moisture tolerance benefit of using the maltodextrins as measured using the Wc methodology. In the graphs, A and B correspond to the recipes above. A lower Wc means a crisper wafer. Above 0.4Aw, a clear benefit is observed with the Wc in using the maltodextrins. For example, the wafer with maltodextrins at Aw 0.6 has a value for Wc of half that of the wafer without maltodextrins. Further the steeper gradient of the graph for the standard wafer clearly shows that this wafer is less moisture tolerant than the wafer containing maltodextrins. In particular, for the standard wafer, at water activities from 0.4 to 0.7, an increase of 0.1 in water activity results in large increases in Wc, some of them greater than 2-fold. In contrast, for the wafer containing maltodextrins, at water activities from 0.4 to 0.7, an increase of 0.1 in water activity results in much smaller increases in Wc, for example, less than 2-fold.

**Claims**

1. A no- or low-sugar wafer containing 0 to 15% by weight sweetener based on the weight of the wafer, comprising from 5 to 30 % by weight of maltodextrins based on the weight of the wafer or product, **characterised in that** said maltodextrins have a monodisperse molecular weight distribution, wherein the distribution of maltodextrin molecules is such that:

   - the polydispersity index (PDI) is 18 or above, preferably 21 or above;
   - 0% to 30%, preferably greater than 0% to 20%, by weight of molecules, have a degree of polymerisation of 5 or below;
   - greater than 40%, preferably greater than 50%, by weight of molecules have a degree of polymerisation from 6 to 300; and
   - 0% to 30%, preferably greater than 0% to 20%, by weight of molecules, have a degree of polymerisation greater than 1000, preferably greater than 1500;

   where the sweetener is sucrose or another sugar or starch hydrolysate having a Dextrose Equivalent (DE) of greater than 20 or an inulin hydrolysate having a Fructose Equivalent of greater than 20; and where the maltodextrins have a Dextrose Equivalent of from 5 to 20.

2. A wafer according to claim 1 wherein the maltodextrins are derived from corn, wheat, rice, potatoes or cassava.

3. A wafer according to claim 2 wherein the maltodextrins are derived from corn.

4. A wafer product according to any preceding claim wherein the wafer contains from 10 to 20 %, by weight of maltodextrins, having a monodisperse molecular weight distribution according to claim 1, based on the weight of the wafer.

5. A wafer according to any preceding claim wherein the maltodextrins have a Dextrose Equivalent (DE) of from 8 to 15.

6. A wafer batter for a no- or low-sugar wafer, containing from 0 to 15% sweetener based on the weight of the wafer, comprising from 5 to 30 % by weight of maltodextrins based on the weight of the wafer, **characterised in that** said maltodextrins have a monodisperse molecular weight distribution, wherein the distribution of maltodextrin molecules is such that:

- the polydispersity index (PDI) is 18 or above, preferably 21 or above;
- 0% to 30%, preferably greater than 0% to 20%, by weight of molecules, have a degree of polymerisation of 5 or below;
- greater than 40%, preferably greater than 50%, by weight of molecules have a degree of polymerisation from 6 to 300; and
- 0% to 30%, preferably greater than 0% to 20%, by weight of molecules, have a degree of polymerisation greater than 1000, preferably greater than 1500

where the sweetener is sucrose or another sugar or starch hydrolysate having a Dextrose Equivalent (DE) of greater than 20 or an inulin hydrolysate having a Fructose Equivalent of greater than 20; and

where the maltodextrins have a Dextrose Equivalent of from 5 to 20.

7. A batter according to claim 6 wherein the maltodextrins are derived from corn, wheat, rice, potatoes or cassava.

8. A batter according to claim 7 wherein the maltodextrins are derived from corn.

9. A batter according to any of claims 6 to 8 wherein the batter or dough contains from 5 to 30 %, preferably from 10 to 20 %, by weight of maltodextrins having a monodisperse molecular weight distribution, based on the weight of the batter or dough.

10. A batter according to any of claims 6 to 9 wherein the maltodextrins have a Dextrose Equivalent (DE) of from 8 to 15.

11. A food product comprising a wafer according to any of claims 1 to 5 and another edible material.

12. A food product according to claim 11 wherein the other edible material is a confectionery, savoury or pet food material.

13. A food product according to claim 11 or 12 wherein one or more of the other edible materials are included as a filling for the wafer.

14. A food product according to claim 11 or 12 wherein the wafer is the centre or part of the centre of a confectionery or savoury product or a pet food.

15. A food product according to any one of claims 11 to 14 wherein the wafer is in direct contact with the food material in the absence of a moisture barrier.

16. Use of maltodextrins having a monodisperse molecular weight distribution, in the production of a no- or low-sugar wafer, containing 0 to 15% by weight sweetener based on the weight of the wafer, to increase the moisture resistance of the wafer, wherein the distribution of maltodextrin molecules is such that:

- the polydispersity index (PDI) is 18 or above, preferably 21 or above;
- 0% to 30%, preferably greater than 0% to 20%, by weight of molecules, have a degree of polymerisation of 5 or below;
- greater than 40%, preferably greater than 50%, by weight of molecules have a degree of polymerisation from 6 to 300; and
- 0% to 30%, preferably greater than 0% to 20%, by weight of molecules, have a degree of polymerisation greater than 1000, preferably greater than 1500;

where the sweetener is sucrose or another sugar or starch hydrolysate having a Dextrose Equivalent (DE) of greater than 20 or an inulin hydrolysate having a Fructose Equivalent of greater than 20; and

where the maltodextrins have a Dextrose Equivalent of from 5 to 20.

17. Method for making a no- or low-sugar wafer containing 0 to 15% by weight sweetener based on the weight of the wafer, comprising the steps of making a batter according to any of claims 6 to 10 by mixing at least flour, water and maltodextrins having a monodisperse molecular weight distribution, wherein the distribution of maltodextrin molecules is such that:

- the polydispersity index (PDI) is 18 or above, preferably 21 or above;
- 0% to 30%, preferably greater than 0% to 20%, by weight of molecules, have a degree of polymerisation of 5 or below;
- greater than 40%, preferably greater than 50%, by weight of molecules have a degree of polymerisation from 6 to 300; and
- 0% to 30%, preferably greater than 0% to 20%, by weight of molecules, have a degree of polymerisation greater than 1000, preferably greater than 1500and baking said batter on at least one hot surface.

where the sweetener is sucrose or another sugar or starch hydrolysate having a Dextrose Equivalent (DE) of greater than 20 or an inulin hydrolysate having a Fructose Equivalent of greater than 20; and
where the maltodextrins have a Dextrose Equivalent of from 5 to 20.

**Patentansprüche**

1. Waffel ohne Zucker oder mit einem geringen Zuckergehalt, enthaltend 0 bis 15 Gew.-% Süßungsmittel basierend auf dem Gewicht der Waffel, aufweisend von 5 bis 30 Gew.-% Maltodextrine basierend auf dem Gewicht der Waffel oder des Produktes, **dadurch gekennzeichnet, dass** die Maltodextrine eine monodisperse Molekulargewichtsverteilung haben, wobei die Verteilung der Maltodextrinmoleküle derart ist, dass:

   - der Polydispersitätsindex (PDI) 18 oder darüber, vorzugsweise 21 oder darüber beträgt;
   - 0 Gew.-% bis 30 Gew.-%, vorzugsweise mehr als 0 Gew.-% bis 20 Gew.-% der Moleküle einen Polymerisationsgrad von 5 oder darunter haben;
   - mehr als 40 Gew.-%, vorzugsweise mehr als 50 Gew.-% der Moleküle einen Polymerisationsgrad von 6 bis 300 haben; und
   - 0 Gew.-% bis 30 Gew.-%, vorzugsweise mehr als 0 Gew.-% bis 20 Gew.-% der Moleküle einen Polymerisationsgrad von mehr als 1000, vorzugsweise mehr als 1500 haben;

   wobei das Süßungsmittel Saccharose oder ein anderer Zucker oder ein Stärkehydrolysat mit einem Dextrose-Äquivalent (DE) von mehr als 20 oder ein Inulinhydrolysat mit einem Fructose-Äquivalent von mehr als 20 ist; und
   wobei die Maltodextrine ein Dextrose-Äquivalent von 5 bis 20 haben.

2. Waffel nach Anspruch 1, wobei die Maltodextrine aus Mais, Weizen, Reis, Kartoffeln oder Maniok stammen.

3. Waffel nach Anspruch 2, wobei die Maltodextrine aus Mais stammen.

4. Waffelprodukt nach einem der vorhergehenden Ansprüche, wobei die Waffel von 10 bis 20 Gew.-% Maltodextrine enthält, die eine monodisperse Molekulargewichtsverteilung nach Anspruch 1 haben, basierend auf dem Gewicht der Waffel.

5. Waffel nach einem der vorhergehenden Ansprüche, wobei die Maltodextrine ein Dextrose-Äquivalent (DE) von 8 bis 15 haben.

6. Waffelbackteig für eine Waffel ohne Zucker oder mit einem geringen Zuckergehalt, enthaltend von 0 bis 15% Süßungsmittel basierend auf dem Gewicht der Waffel, aufweisend von 5 bis 30 Gew.-% Maltodextrine basierend auf dem Gewicht der Waffel, **dadurch gekennzeichnet, dass** die Maltodextrine eine monodisperse Molekulargewichtsverteilung haben, wobei die Verteilung der Maltodextrinmoleküle derart ist, dass:

   - der Polydispersitätsindex (PDI) 18 oder darüber, vorzugsweise 21 oder darüber beträgt;
   - 0 Gew.-% bis 30 Gew.-%, vorzugsweise mehr als 0 Gew.-% bis 20 Gew.-% der Moleküle einen Polymerisationsgrad von 5 oder darunter haben;
   - mehr als 40 Gew.-%, vorzugsweise mehr als 50 Gew.-% der Moleküle einen Polymerisationsgrad von 6 bis 300 haben; und
   - 0 Gew.-% bis 30 Gew.-%, vorzugsweise mehr als 0 Gew.-% bis 20 Gew.-% der Moleküle einen Polymerisationsgrad von mehr als 1000, vorzugsweise mehr als 1500 haben,
   wobei das Süßungsmittel Saccharose oder ein anderer Zucker oder Stärkehydrolysat mit einem Dextrose-Äquivalent (DE) von mehr als 20 oder ein Inulinhydrolysat mit einem Fructose-Äquivalent von mehr als 20 ist; und
   wobei die Maltodextrine ein Dextrose-Äquivalent von 5 bis 20 haben.

7. Backteig nach Anspruch 6, wobei die Maltodextrine aus Mais, Weizen, Reis, Kartoffeln oder Maniok stammen.

8. Backteig nach Anspruch 7, wobei die Maltodextrine aus Mais stammen.

9. Backteig nach einem der Ansprüche 6 bis 8, wobei der Backteig oder Teig von 5 bis 30 Gew.-%, vorzugsweise von 10 bis 20 Gew.-% Maltodextrine mit einer monodispersen Molekulargewichtsverteilung, basierend auf dem Gewicht des Backteigs oder Teigs, enthält.

10. Backteig nach einem der Ansprüche 6 bis 9, wobei die Maltodextrine ein Dextrose-Äquivalent (DE) von 8 bis 15 haben.

11. Lebensmittelprodukt aufweisend eine Waffel nach einem der Ansprüche 1 bis 5 und ein anderes essbares Material.

12. Lebensmittelprodukt nach Anspruch 11, wobei das andere essbare Material ein Süßwarenprodukt, ein herzhaft-pikantes Produkt oder ein Haustierfutter ist.

13. Lebensmittelprodukt nach Anspruch 11 oder 12, wobei eines oder mehrere der anderen essbaren Materialien als Füllung für die Waffel enthalten sind.

14. Lebensmittelprodukt nach Anspruch 11 oder 12, wobei die Waffel der Kern oder ein Teil des Kerns eines Süßwarenproduktes oder eines herzhaft-pikanten Produktes oder eines Haustierfutters ist.

15. Lebensmittelprodukt nach einem der Ansprüche 11 bis 14, wobei die Waffel in direktem Kontakt mit dem Lebensmittelmaterial ohne Vorhandensein einer Feuchtigkeitssperre steht.

16. Verwendung von Maltodextrinen mit einer monodispersen Molekulargewichtsverteilung in der Herstellung einer Waffel ohne Zucker oder mit einem geringen Zuckergehalt, enthaltend 0 bis 15 Gew.-% Süßungsmittel basierend auf dem Gewicht der Waffel, um die Feuchtigkeitsbeständigkeit der Waffel zu erhöhen, wobei die Verteilung der Maltodextrinmoleküle derart ist, dass:

    - der Polydispersitätsindex (PDI) 18 oder darüber, vorzugsweise 21 oder darüber beträgt;
    - 0 Gew.-% bis 30 Gew.-%, vorzugsweise mehr als 0 Gew.-% bis 20 Gew.-% der Moleküle einen Polymerisationsgrad von 5 oder darunter haben;
    - mehr als 40 Gew.-%, vorzugsweise mehr als 50 Gew.-% der Moleküle einen Polymerisationsgrad von 6 bis 300 haben; und
    - 0 Gew.-% bis 30 Gew.-%, vorzugsweise mehr als 0 Gew.-% bis 20 Gew.-% der Moleküle einen Polymerisationsgrad von mehr als 1000, vorzugsweise mehr als 1500 haben;
    wobei das Süßungsmittel Saccharose oder ein anderer Zucker oder ein Stärkehydrolysat mit einem Dextrose-Äquivalent (DE) von mehr als 20 oder ein Inulinhydrolysat mit einem Fructose-Äquivalent von mehr als 20 ist; und
    wobei die Maltodextrine ein Dextrose-Äquivalent von 5 bis 20 haben.

17. Verfahren zur Herstellung einer Waffel ohne Zucker oder mit einem geringen Zuckergehalt, enthaltend 0 bis 15 Gew.-% Süßungsmittel basierend auf dem Gewicht der Waffel, aufweisend die Schritte des Herstellens eines Backteiges nach einem der Ansprüche 6 bis 10 durch Mischen von mindes- tens Mehl, Wasser und Maltodextrinen mit einer monodispersen Molekulargewichtsverteilung, wobei die Verteilung der Maltodextrinmoleküle derart ist, dass:

    - der Polydispersitätsindex (PDI) 18 oder darüber, vorzugsweise 21 oder darüber beträgt;
    - 0 Gew.-% bis 30 Gew.-%, vorzugsweise mehr als 0 Gew.-% bis 20 Gew.-% der Moleküle einen Polymerisationsgrad von 5 oder darunter haben;
    - mehr als 40 Gew.-%, vorzugsweise mehr als 50 Gew.-% der Moleküle einen Polymerisationsgrad von 6 bis 300 haben; und
    - 0 Gew.-% bis 30 Gew.-%, vorzugsweise mehr als 0 Gew.-% bis 20 Gew.-% der Moleküle einen Polymerisationsgrad von mehr als 1000, vorzugsweise mehr als 1500 haben, und Backen des Backteiges auf mindestens einer heißen Oberfläche,
    wobei das Süßungsmittel Saccharose oder ein anderer Zucker oder ein Stärkehydrolysat mit einem Dextrose-Äquivalent (DE) von mehr als 20 oder ein Inulinhydrolysat mit einem Fructose-Äquivalent von mehr als 20 ist; und
    wobei die Maltodextrine ein Dextrose-Äquivalent von 5 bis 20 haben.

## Revendications

1. Gaufrette sans sucre ou à faible teneur en sucre contenant de 0 à 15% en poids d'édulcorant sur la base du poids de la gaufrette, comprenant de 5 à 30 % en poids de maltodextrines sur la base du poids de la gaufrette ou du produit, **caractérisée en ce que** lesdites maltodextrines présentent une distribution monodispersée de poids moléculaire, dans laquelle la distribution de molécules de maltodextrine est telle que :

    - l'index de polydispersité (PDI) est 18 ou plus, de préférence 21 ou plus ;
    - de 0% à 30%, de préférence plus que 0% à 20%, en poids de molécules, présentent un degré de polymérisation de 5 ou moins ;
    - plus que 40%, de préférence plus que 50%, en poids de molécules présentent un degré de polymérisation de 6 à 300 ; et
    - de 0% à 30%, de préférence plus que 0% à 20%, en poids de molécules, présentent un degré de polymérisation supérieur à 1000, de préférence supérieur à 1500 ;
    dans laquelle l'édulcorant est du saccharose ou un autre sucre ou un hydrolysat d'amidon ayant un équivalent en dextrose (DE) supérieur à 20 ou un hydrolysat d'inuline ayant un équivalent en fructose supérieur à 20 ; et
    dans laquelle les maltodextrines ont un équivalent en dextrose compris entre 5 et 20.

2. Gaufrette selon la revendication 1, dans laquelle les maltodextrines sont dérivées de maïs, blé, riz, pommes de terre ou manioc.

3. Gaufrette selon la revendication 2, dans laquelle les maltodextrines sont dérivées de maïs.

**4.** Produit de gaufrette selon l'une quelconque des revendications précédentes, dans lequel la gaufrette contient de 10 à 20% en poids de maltodextrines, présentant une distribution monodispersée de poids moléculaire selon la revendication 1, sur la base du poids de la gaufrette.

**5.** Gaufrette selon l'une quelconque des revendications précédentes, dans laquelle les maltodextrines ont un équivalent en dextrose (DE) compris entre 8 et 15.

**6.** Pâte à frire de gaufrette pour une gaufrette sans sucre ou à faible teneur en sucre, contenant de 0 à 15% d'édulcorant sur la base du poids de la gaufrette, comprenant de 5 à 30 % en poids de maltodextrines sur la base du poids de la gaufrette, **caractérisée en ce que** lesdites maltodextrines présentent une distribution monodispersée de poids moléculaire, dans laquelle la distribution de molécules de maltodextrine est telle que :

- l'index de polydispersité (PDI) est 18 ou plus, de préférence 21 ou plus ;
- de 0% à 30%, de préférence plus que 0% à 20%, en poids de molécules, présentent un degré de polymérisation de 5 ou moins ;
- plus que 40%, de préférence plus que 50%, en poids de molécules présentent un degré de polymérisation de 6 à 300 ; et
- de 0% à 30%, de préférence plus que 0% à 20%, en poids de molécules, présentent un degré de polymérisation supérieur à 1000, de préférence supérieur à 1500 ;

dans laquelle l'édulcorant est du saccharose ou un autre sucre ou un hydrolysat d'amidon ayant un équivalent en dextrose (DE) supérieur à 20 ou un hydrolysat d'inuline ayant un équivalent en fructose supérieur à 20 ; et
dans laquelle les maltodextrines ont un équivalent en dextrose compris entre 5 et 20.

**7.** Pâte à frire selon la revendication 6, dans laquelle les maltodextrines sont dérivées de maïs, blé, riz, pommes de terre ou manioc.

**8.** Pâte à frire selon la revendication 7, dans laquelle les maltodextrines sont dérivées de maïs.

**9.** Pâte à frire selon l'une quelconque des revendications 6 à 8, dans laquelle la pâte à frire ou la pâte contient de 5 à 30%, de préférence de 10 à 20%, en poids de maltodextrines présentant une distribution monodispersée de poids moléculaire, sur la base du poids de la pâte à frire ou de la pâte.

**10.** Pâte à frire selon l'une quelconque des revendications 6 à 9, dans laquelle les maltodextrines ont un équivalent en dextrose (DE) compris entre 8 et 15.

**11.** Produit alimentaire comprenant une gaufrette selon l'une quelconque des revendications 1 à 5 et une autre matière comestible.

**12.** Produit alimentaire selon la revendication 11, dans lequel l'autre matière comestible est une confiserie, une matière salée ou une matière d'aliment pour animal de compagnie.

**13.** Produit alimentaire selon la revendication 11 ou 12, dans lequel une ou plusieurs des autres matières comestibles sont incluses en tant que matière de remplissage pour la gaufrette.

**14.** Produit alimentaire selon la revendication 11 ou 12, dans lequel la gaufrette est le centre ou une partie du centre d'une confiserie, d'un produit salée ou d'un aliment pour animal de compagnie

**15.** Produit alimentaire selon l'une quelconque des revendications 11 à 14, dans lequel la gaufrette est en contact direct avec la matière alimentaire en l'absence d'une barrière d'humidité.

**16.** Utilisation de maltodextrines présentant une distribution monodispersée de poids moléculaire, dans la production d'une gaufrette sans sucre ou à faible teneur en sucre, contenant de 0 à 15% en poids d'édulcorant sur la base du poids de la gaufrette, afin d'augmenter la résistance à l'humidité de la gaufrette, dans laquelle la distribution de molécules de maltodextrine est telle que :

- l'index de polydispersité (PDI) est 18 ou plus, de préférence 21 ou plus ;
- de 0% à 30%, de préférence plus que 0% à 20%, en poids de molécules, présentent un degré de polymérisation de 5 ou moins ;
- plus que 40%, de préférence plus que 50%, en poids de molécules présentent un degré de polymérisation de 6 à 300 ; et
- de 0% à 30%, de préférence plus que 0% à 20%, en poids de molécules, présentent un degré de polymérisation supérieur à 1000, de préférence supérieur à 1500 ;

dans laquelle l'édulcorant est du saccharose ou un autre sucre ou un hydrolysat d'amidon ayant un équivalent en dextrose (DE) supérieur à 20 ou un hydrolysat d'inuline ayant un équivalent en fructose supérieur à 20 ; et
dans laquelle les maltodextrines ont un équivalent en dextrose compris entre 5 et 20.

**17.** Procédé de fabrication d'une gaufrette sans sucre ou à faible teneur en sucre contenant de 0 à 15% en poids d'édulcorant sur la base du poids de la gaufrette, comprenant les étapes consistant à fabriquer une pâte à frire selon l'une quelconque des revendications 6 à 10 en mélangeant au moins de la farine, de l'eau et des maltodextrines présentant une distribution monodispersée de poids moléculaire, dans lequel la distribution de molécules de maltodextrine est telle que :

- l'index de polydispersité (PDI) est 18 ou plus, de préférence 21 ou plus ;
- de 0% à 30%, de préférence plus que 0% à 20%, en poids de molécules, présentent un degré de polymérisation de 5 ou moins ;
- plus que 40%, de préférence plus que 50%, en poids de molécules présentent un degré de polymérisation de 6 à 300 ; et
- de 0% à 30%, de préférence plus que 0% à 20%, en poids de molécules, présentent un degré de polymérisation supérieur à 1000, de préférence supérieur à 1500 ;
et à cuire ladite pâte à frire sur au moins une surface chaude,
dans lequel l'édulcorant est du saccharose ou un autre sucre ou un hydrolysat d'amidon ayant un équivalent en dextrose (DE) supérieur à 20 ou un hydrolysat d'inuline ayant un équivalent en fructose supérieur à 20 ; et
dans lequel les maltodextrines ont un équivalent en dextrose compris entre 5 et 20.

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008031796 A
- WO 2008031798 A
- WO 0239820 A
- EP 1415539 A
- EP 07106604 A
- US 6824799 B, Huang Victor

### Non-patent literature cited in the description

- **K.F. TIEFENBACHER.** Encyclopaedia of Food Science, Food Technology and Nutrition. Academic Press Ltd, 1993, 417-420
- Food Marketing & Technology. April 1994, 14
- **STEFFI HEMPEL.** Influence of inulin modification and flour type on the sensory quality of prebiotic water crackers. *European Food Research and Technology,* 31 March 2006, vol. 224 (3
- **MITCHELL, J. R. et al.** *Journal of the Science of Food and Agriculture,* 2000, vol. 80, 1679-1685
- **VAN HECKE E.** Contribution a l'étude des propriétés texturals des produits alimentaires alvéolés. Mise au point de nouveaux capteurs. *Ph.D. Thesis,* 1991